# EUROPEAN PATENT APPLICATION

(11) **EP 1 429 338 A1**
(43) Date of publication of application: **16.06.2004**
(21) Application number: 02762985.6
(22) Date of filing: 03.09.2002
(51) Int. Cl.: G11B 33/10

(54) **RECORDING/REPRODUCING DEVICE**

(30) Priority: 18.09.2001 JP 2001282760
(71) Applicant: Mitsumi Electric Co., Ltd., Tama-shi, Tokyo 206-8567 (JP)
(72) Inventor: FURUKAWA,K MITSUMI ELECT.CO., LTD.ATSUGI OPS.BASE, Atsugi-Shi, Kanagawa 243-8533 (JP); YASUMA,T MITSUMI ELECTRIC CO.,LTD.Atsugi OPS. Base, Atsugi-Shi, Kanagawa 243-8533 (JP)
(74) Representative: Lippert, Hans, Dipl.-Ing.
(86) International application number: PCT/JP2002/008946
(87) International publication number: WO 2003/025934

(57) **Abstract**

Upon performing a recording/reproducing operation with respect to an optical disc at an operational speed higher than a standard operational speed, an operational rate is indicated by an operational rate indicator. Indication colors are changed according to the operational rate. Alternatively, a plurality of indicating elements are lighted according to the operational rate. Alternatively, characters, numerals, or symbols, etc., are displayed. Thereby, the operational speed (the operational rate) becomes easily visible from outside of the apparatus.

## Description

### Technical Field

The present invention recording/reproducing apparatus a recording/reproducing apparatus and/or a reproduction with resp recording medium which is capable rates.

### Background Art

Conventionally, an been widely used as a disc-form recording medium. The optical recording medium is a recording medium in a form of a disc which includes a signal recording layer; a recording and/or a reproduction (hereinafter referred to as recording/reproduction) of an information signal is performed by projecting a laser light to this signal recording layer.

Such optical recording media include a read-only optical disc, such as a CD (Compact Disc) or a CD-ROM (CD-Read Only Memory) for example, in which a pit row corresponding to an information signal to be recorded is formed beforehand on a disc substrate. In the read-only optical disc, a principal surface on the disc substrate on which the pit row is formed functions as a signal recording layer.

Besides, an optical disc used in a so-called compact disc recordable system and allowing an information signal to be written once (CD-R: CD-Recordable) has been put in practical use. The CD-R includes a signal recording layer formed of an organic-dye-group material; by projecting a laser light to the signal recording layer, a reflectance at an irradiated position is varied so as to perform a recording. Additionally, by detecting a reflectance on the signal recording layer, a recorded signal is reproduced.

Further, as an optical recording medium, a phase-change-type optical disc, such as a CD-RW (CD-Rewritable), in which a recorded signal can be rewritten by using a phase change of a signal recording layer, and other optical discs have been put in practical use.

The above-described optical discs, such as the CD, the CD-ROM, the CD-R and the CD-RW, are provided with specifications standardized according to a standard referred to as a so-called CD format. Accordingly, the CD-R and the CD-RW on which an information signal is writable once or rewritable can be reproduced by an apparatus reproducing the read-only CD or CD-ROM.

In an optical disc apparatus performing a recording of an information signal to the above-described CD-R or CD-RW, ordinarily, prior to actually performing a writing of the information signal, a test writing is performed by using a test-writing area provided on the CD-R or the CD-RW so as to set a projecting power of a laser light that optimizes an asymmetry value; thereafter, the recording of the information signal is performed by projecting the laser light with this projecting power. Besides, in the optical disc apparatus, while the recording of the information signal is performed, variations of the projecting power of the laser light are corrected by APC (Automatic Power Control) so that the recording is always performed at a constant projecting power.

In the standard referred to as the so-called CD format, an operational speed enabling data to be transferred at 150 kilobytes per second upon recording/reproducing is supposed to be a standard operational speed. Recently, for the purpose of achieving a high transfer rate, it has become common to perform a recording/reproduction at an operational speed four times, eight times or 16 times as fast as this standard speed.

Besides, upon performing a recording/reproduction with respect to the CD-RW, for example, an error rate may become high due to a weight eccentricity originating from a disproportion in ink amounts printed on a label surface, or due to an eccentricity of the disc. In such cases, an operational speed may be decreased by degrees to a degree that enables a normal recording/reproducing operation.

However, with a conventional optical disc apparatus, information regarding an operational speed cannot be easily learned; therefore, it has been difficult to conjecture a recording time, or to judge a disc-specific recording/reproducing capability.

### Disclosure of Invention

It is a general object of the present invention to provide an improved and useful recording/reproducing apparatus in which the above-mentioned problems are eliminated.

A more specific object of the present invention is to provide a recording/reproducing apparatus which enables an operator to easily learn an operational speed (an operational rate) upon performing a recording/reproduction with respect to a disc-form recording medium.

In order to achieve the above-mentioned objects, there is provided according to one aspect of the present invention a recording/reproducing apparatus performing a recording and/or a reproduction with respect to a recording medium in a form of a disk, the apparatus including an operational rate indicating part indicating an operational rate upon the recording and/or upon the reproduction with respect to the recording medium, and a controlling part controlling an indication of the operational rate indicating part.

According to the above-mentioned invention, the operational rate upon the recording and/or the reproduction can be indicated on the operational rate indicating part. Thereby, it becomes easy to estimate a recording time, or to judge a disc-specific recording/reproducing capability.

In the recording/reproducing apparatus according to the present invention, the operational rate indicating part may include an indicating element capable of displaying a plurality of colors, and the controlling part may control the indicating element so that the indicating element displays an indication color corresponding to the operational rate. The indicating element is preferred to be a light emitting diode capable of emitting light in a plurality of colors.

Additionally, in the recording/reproducing apparatus according to the present invention, the operational rate indicating part may include a plurality of indicating elements, and the controlling part may control the indicating elements so as to bring a predetermined indicating element corresponding to the operational rate into an indicating state. The indicating elements are preferred to be a plurality of light emitting diodes emitting light in colors different from one another.

Additionally, in the recording/reproducing apparatus according to the present invention, the operational rate indicating part may include an indicating element capable of displaying characters, numerals or symbols, and the controlling part may control the indicating element so as to display the characters, the numerals or the symbols indicating the operational rate. The indicating element is preferred to be a liquid crystal display panel.

Additionally, in the recording/reproducing apparatus according to the present invention, the operational rate indicating part is preferred to be provided at a front panel of the recording/reproducing apparatus.

Other objects, features and advantages of the present invention will become more apparent from the following detailed description when read in conjunction with the accompanying drawings.

### Brief Description of Drawings

FIG.1 is a block diagram of a configuration of an optical disc apparatus according to an embodiment of the present invention.
FIG.2 is a front view of an example of a front panel provided in the optical disc apparatus shown in FIG.1.
FIG.3 is a front view of another example of the front panel provided in the optical disc apparatus shown in FIG.1.
FIG.4 is a front view of still another example of the front panel provided in the optical disc apparatus shown in FIG.1.

### Best Mode for Carrying Out the Invention

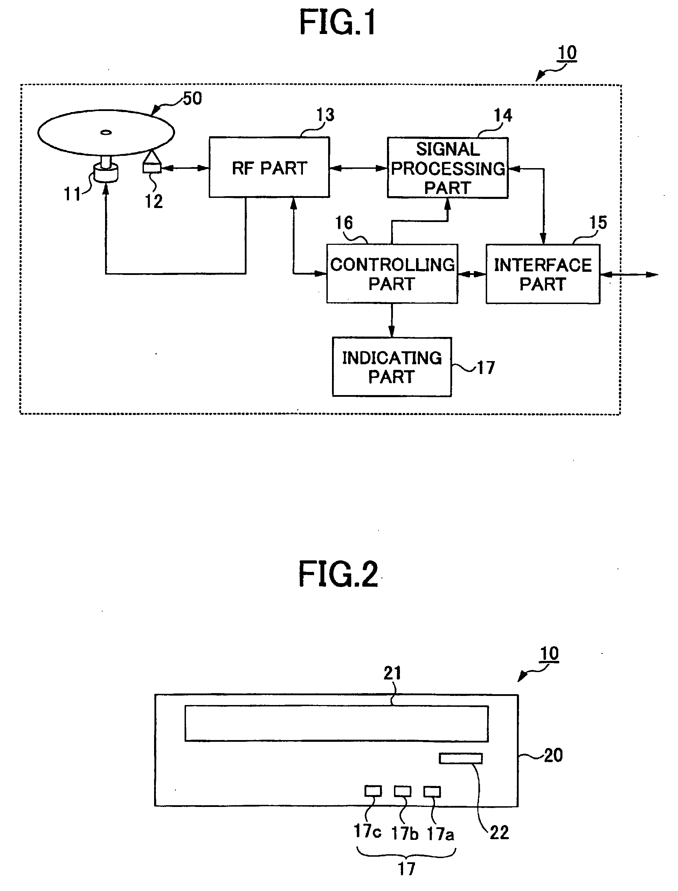

A description will be given, with reference to the drawings, of an embodiment according to the present invention. FIG.1 is a block diagram showing a configuration of an optical disc apparatus 10 according to an embodiment of the present invention. The optical disc apparatus 10 is an apparatus that performs a recording and reproduction of an information signal with respect to an optical disc, such as a CD-R or a CD-RW, based on a CD format. It is noted that the present invention is applicable to any recording apparatus that performs a recording/reproduction with respect to a disc-form recording medium.

As shown in FIG.1, an optical disc 50 as a recording/reproducing medium is mounted on the optical disc apparatus 10. The optical disc apparatus 10 comprises a spindle motor 11 rotationally driving the optical disc 50, and an optical pickup 12 projecting a laser light to a signal recording layer of the optical disc 50 and detecting a return light from this signal recording layer. The optical pickup 12 is movable in a diametrical direction of the optical disc 50 by a driving mechanism (not shown in the figure), and projects the laser light to any position on the optical disc 50.

Additionally, the optical disc apparatus 10 comprises an RF part 13, a signal processing part 14 connected to the RF part 13, and an interface part 15 connected to the signal processing part 14.

The RF part 13 applies various signal processes to an RF signal output according to an intensity of the return light detected by the optical pickup 12. Besides, the RF part 13 performs a feedback control of the spindle motor 11 according to an output signal from the optical pickup 12 so as to control the optical disc 50 to revolve with maintaining a predetermined angular velocity or linear velocity upon a recording/reproduction with respect to the optical disc 50.

The signal processing part 14 applies various signal processes, such as a modulation/demodulation process and an encoding/decoding process, for example, to a signal read from the optical disc 50 or to a signal to be recorded on the optical disc 50.

The interface part 15 exchanges signals with an external apparatus, such as a computer apparatus, for example. The interface part 15 outputs the signal read from the optical disc 50 and subjected to a predetermined signal process by the signal processing part 14 to the external apparatus. Besides, the interface part 15 transfers a signal supplied from the external apparatus to the signal processing part 14 so as to record the signal on the optical disc 50.

Additionally, the optical disc apparatus 10 comprises a controlling part 16 controlling an operation of each of the parts. The controlling part 16 controls the operation of each of the parts of the apparatus according to various requests supplied from the external apparatus via the interface part 15.

Further, in the optical disc apparatus 10, an indicating part 17 indicating an operational rate upon a recording/reproduction is connected to the controlling part 16. In the optical disc apparatus 10, a transfer rate can be changed according to a type of the optical disc 50 or to a recording/reproducing operation with respect to the optical disc 50. Accordingly, the recording/reproducing operation can be performed at a fourfold speed, an eightfold speed, a 16-fold speed, a 24-fold speed or a 32-fold speed with 150 KB/sec being a standard speed. Thereupon, for example, when the recording/reproduction is performed at the fourfold speed, the transfer rate is set at approximately 600 KB/sec; when the recording/reproduction is performed at the eightfold speed, the transfer rate is set at approximately 1600 KB/sec. That is, the recording/reproducing is performed at a transfer rate of approximately an integral multiple of the standard speed.

Specifically, upon reproducing a CD-ROM, the apparatus operates at the 24-fold speed; upon performing a recording to a CD-RW, the apparatus operates at the fourfold speed; and upon performing a recording to a CD-R, the apparatus operates at the eightfold speed. Such control of operational speeds is achieved by the controlling part 16 increasing a rotational velocity of the spindle motor 11 higher than a standard velocity, or increasing an operation speed at the signal processing part 14, to an extent that no abnormality is found in an output signal the RF part 13.

FIG.2 is a front view showing a front panel 20 of the optical disc apparatus 10. The front panel 20 positioned at a front side of a body casing of the optical disc apparatus 10 is provided with a tray 21 on which the optical disc 50 is placed so as to be inserted into the apparatus or ejected from the apparatus, and an operation button 22 for drawing in or ejecting the tray 21. Additionally, the indicating part is provided at the front panel 20.

At this point, for example, as shown in FIG.2, the indicating part 17 comprises a power indicator 17a indicating ON/OFF of a power of the optical disc apparatus 10 per se, an operation mode indicator 17b indicating an operation mode with respect to the optical disc 50, and an operational rate indicator 17c indicating the operational rate. Each of the indicators is composed of a light emitting diode (LED), and a light emitting operation thereof is controlled by the controlling part 16.

The power indicator 17a lights in green when the power of the optical disc apparatus 10 is ON, and lights off when the power is OFF, for example. The operation mode indicator 17b lights off when no recording/reproducing operation with respect to the optical disc 50 is performed, lights in green when a reproducing operation is performed, and lights in red when a recording operation is performed, for example. The operational rate indicator 17c lights off when a recording/reproducing operation with respect to the optical disc 50 is performed at the eightfold speed or lower, lights in orange (amber) upon operating at the 16-fold speed, lights in green upon operating at the 24-fold speed, and lights in red upon operating at the 32-fold speed, for example.

The optical disc apparatus 10 comprises the above-described operational rate indicator 17c, and indication colors to be lighted are controlled according to the operational rates; accordingly, an operator can visually learn a currently set operational rate with ease. Thereby, it becomes easy to infer a recording time, or to judge a disc-specific recording/reproducing capability.

Besides, relations between the operational rates and the indication colors are not limited to the above-described arrangements, and can be chosen discretionarily. In addition, the operational rate indicator 17c is not limited to using the light emitting diode. For example, the operational rate indicator 17c may be formed by using an incandescent lamp, or various EL (Electro-Luminescent) elements, etc.

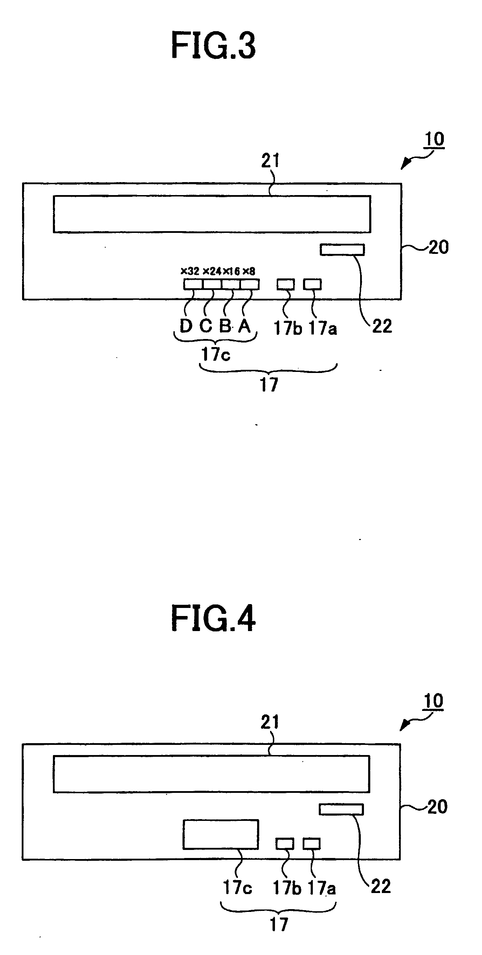

Next, a description will be given, with reference to FIG.3, of another example of forming the operational rate indicator 17c. Besides, FIG.3 corresponds to FIG.2 used in the foregoing description, and shows the front panel of the optical disc apparatus 10.

As shown in FIG.3, the operational rate indicator 17c may comprise a plurality of indicating elements A to D, and a predetermined indicating element may be caused to indicate by light emission (be lighted) according to the operational rate. Specifically, the indicating element A is lighted upon operating at the eightfold speed or lower, the indicating element B is lighted upon operating at the 16-fold speed, the indicating element C is lighted upon operating at the 24-fold speed, and the indicating element D is lighted upon operating at the 32-fold speed, for example.

Besides, for example, all of the indicating elements indicating the operational rates lower than an operational speed during a recording/reproducing operation may be lighted. In this case, specifically, all of the indicating elements A to C are lighted upon operating at the 24-fold speed, for example. Accordingly, as the operational rate becomes higher, the number of the indicating elements to be lighted becomes larger; therefore, it becomes easy for an operator to grasp a magnitude of the current operational rate (the operational speed) visually.

Next, a description will be given, with reference to FIG.4, of still another example of forming the operational rate indicator 17c. Besides, FIG.4 corresponds to FIG.2 used in the foregoing description, and shows the front panel 20 of the optical disc apparatus 10.

As shown in FIG.4, the operational rate indicator 17c may be arranged to be capable of displaying characters, numerals, or symbols by a liquid crystal display panel, for example, and so forth, and characters, numerals, or symbols indicating the operational rate may be displayed. Specifically, a numeral "8" is displayed upon operating at the eightfold speed, a numeral "16" is displayed upon operating at the 16-fold speed, and so forth, for example.

Besides, display contents of the liquid crystal display panel as described above are controlled by the controlling part 16 according to a currently set operational rate. In this case, too, an operator can visually learn the currently set operational rate with ease. Thereby, it becomes easy to infer a recording time, or to judge a disc-specific recording/reproducing capability.

The present invention is not limited to the specifically disclosed embodiments, and variations and modifications may be made within the scope of the present invention.

## Claims

1. A recording/reproducing apparatus performing a recording and/or a reproduction with respect to a recording medium in a form of a disk, the apparatus comprising:
an operational rate indicating part indicating an operational rate upon the recording and/or upon the reproduction with respect to said recording medium; and
a controlling part controlling an indication of said operational rate indicating part.

2. The recording/reproducing apparatus as claimed in claim 1, wherein said operational rate indicating part includes an indicating element capable of displaying a plurality of colors, and said controlling part controls said indicating element so that said indicating element displays an indication color corresponding to the operational rate.

3. The recording/reproducing apparatus as claimed in claim 2, wherein said indicating element is composed of a light emitting diode capable of emitting light in a plurality of colors.

4. The recording/reproducing apparatus as claimed in claim 1, wherein said operational rate indicating part includes a plurality of indicating elements, and said controlling part controls said indicating elements so as to bring a predetermined indicating element corresponding to the operational rate into an indicating state.

5. The recording/reproducing apparatus as claimed in claim 4, wherein said indicating elements are a plurality of light emitting diodes emitting light in colors different from one another.

6. The recording/reproducing apparatus as claimed in claim 1, wherein said operational rate indicating part includes an indicating element capable of displaying characters, numerals or symbols, and said controlling part controls said indicating element so as to display the characters, the numerals or the symbols indicating the operational rate.

7. The recording/reproducing apparatus as claimed in claim 6, wherein said indicating element is a liquid crystal display panel.

8. The recording/reproducing apparatus as claimed in claim 1, wherein said operational rate indicating part is provided at a front panel of said recording/reproducing apparatus.
